Europäisches Patentamt

European Patent Office

Office européen des brevets

(19)

(11) Veröffentlichungsnummer: **0 461 420 A1**

## (12) EUROPÄISCHE PATENTANMELDUNG

(21) Anmeldenummer: 91108094.3

(22) Anmeldetag: 18.05.91

(51) Int. Cl.⁵: **B60T 8/48**, B60T 11/34

(30) Priorität: 15.06.90 DE 4019068

(43) Veröffentlichungstag der Anmeldung:
18.12.91 Patentblatt 91/51

(84) Benannte Vertragsstaaten:
CH DE GB IT LI

(71) Anmelder: **ROBERT BOSCH GmbH**
**Postfach 10 60 50**
**W-7000 Stuttgart 10(DE)**

(72) Erfinder: **Wolff, Günter, Dipl.-Ing. (FH)**
**Schulberg 20**
**W-7141 Schwieberdingen(DE)**

(54) **Druckschaltventil, insbesondere für hydraulische Fahrzeugbremsanlagen mit Antriebsschlupfregelung (ASR).**

(57) Während des Schaltens des Ventils soll der Druck kurzzeitig erhöht werden.

Das Druckschaltventil (1) hat eine zylindrische Kammer (16) mit einer ersten, an einem Ventilsitz (8) eines Zuströmkanals (4) angreifenden Kugel (18). An dieser ist eine zweite, federbelastete Kugel (19) abgestützt. Beide Kugeln (18) sind mit geringem radialen Spiel in der zylindrischen Kammer (16) längsbewegbar. Von der zylindrischen Kammer (16) zweigt ein Abströmkanal (23) an einer Stelle so ab, daß beim Schalten des Ventils (1) die den Kugelmittelpunkt der ventilsitzseitigen, ersten Kugel (18) enthaltende, rechtwinklig zur Kammerlängsachse (17) verlaufende Normalebene (25) den Mündungsquerschnitt des Abströmkanals (23) erst dann erreicht, wenn die entsprechende Normalebene (24) der federseitigen, zweiten Kugel (19) bereits aus dem Mündungsquerschnitt ausgetreten ist.

EP 0 461 420 A1

## Stand der Technik

Die Erfindung geht aus von einem Druckschaltventil nach der Gattung des Hauptanspruchs.

Bei Bremsanlagen mit einer Einrichtung zur Begrenzung von Antriebsschlupf ist es erwünscht, beim Wirksamwerden der Antriebsschlupfregelung die Bremsbeläge der Radbremsen möglichst schnell zum Angriff an die Bremsscheibe oder Bremstrommel zu bringen. Dagegen soll beim anschließenden Einsteuern vom Bremsdruck in die Radbremse des durchdrehenden, angetriebenen Fahrzeugrades oder die Radbremsen durchdrehender Räder dieser mit definierter Geschwindigkeit ansteigen. Hierdurch läßt sich ein besseres Regelverhalten bei der Zumessung des Bremsdrucks erzielen.

Es ist deshalb eine hydraulische Bremsanlage für Fahrzeuge mit einer Einrichtung zur Begrenzung von Antriebsschlupf an den antreibbaren Fahrzeugrädern vorgeschlagen worden, welche einen hydraulisch beaufschlagbaren, nach dem Plungerprinzip arbeitenden Druckerzeuger zum Erzeugen vom Bremsdruck hat (Anmeldung P 39 36 578.6). Dem an eine Druckquelle angeschlossenen Druckerzeuger ist ein Druckschaltventil mit einer Drossel vorgeschaltet, die bis zum Anlegen des Bremsbelags unwirksam ist. Der beim Anlegen des Bremsbelags sich im aktivierten Bremsanlagenteil steigernde Druck schaltet das Ventil, so daß die Drossel wirksam und der Druckerzeuger mit verringerter Druckmittelmenge versorgt wird. Dies hat beim folgenden Bremsdrucksteigern eine verringerte Druckanstiegsgeschwindigkeit zur Folge.

Außerdem ist eine hydraulische Bremsanlage mit einer Einrichtung zur Begrenzung von Antriebsschlupf vorgeschlagen worden, die eine Hochdruckpumpe zum Erzeugen von Bremsdruck in der Radbremse eines durchdrehenden Fahrzeugrades und eine als Vorladepumpe bezeichnete Niederdruckpumpe zum Speisen der Hochdruckpumpe mit Druckmittel aufweist (Anmeldung P 40 17 872.2). Die Niederdruckpumpe ist so in der Bremsanlage geschaltet, daß sie mit beginnender Wirksamkeit der Antriebsschlupfregelung zunächst unmittelbar in die Radbremse fördert und den Bremsbelag zum Anliegen bringt, bevor die Förderung der Hochdruckpumpe einsetzt. Der von der Niederdruckpumpe erzeugte Druck reicht unter extremen Bedingungen jedoch nicht immer zum Anlegen des Bremsbelags aus. Parallel zu der Niederdruckpumpe ist ein Druckschaltventil angeordnet, mit dem der von der Pumpe erzeugte Druck begrenzt werden soll.

## Vorteile der Erfindung

Das erfindungsgemäße Druckschaltventil mit den kennzeichnenden Merkmalen des Hauptanspruchs hat demgegenüber den Vorteil, daß eine Druckerhöhung im Zuströmkanal für eine begrenzte Zeitdauer erzielt wird, während der das Ventil umschaltet, d. h. die ventilsitzseitige Kugel die Mündung des Abströmkanals freigibt. Dabei kann die Druckerhöhung und deren Zeitdauer bestimmt werden, insbesondere durch Bemessung des radialen Spiels der Kugeln in der Kammer sowie der zur Öffnung des Abströmkanalquerschnitts erforderlichen Eindringtiefe der zweiten Kugel in den auf die Mündung federseitig folgenden Kammerabschnitt.

Der von der Niederdruckpumpe der vorgenannten hydraulischen Bremsanlage erzeugte Druck kann daher bei Förderbeginn kurzzeitig erhöht werden, wenn das erfindungsgemäße Druckschaltventil mit seinem Zuströmkanal an die Druckleitung der Niederdruckpumpe und mit seinem Abströmkanal an die Saugleitung der Niederdruckpumpe angeschlossen und von der Zuströmseite des Druckschaltventils eine Leitung unmittelbar zur Radbremse gezogen wird, durch die der erhöhte Druck bis zum Umschalten wirksam werden kann. Damit kann zwar die Niederdruckpumpe einer höheren Belastung unterliegen; weil diese aber nur kurzzeitig wirkt, ist eine Überlastung vermieden.

Durch die in den Unteransprüchen aufgeführten Maßnahmen sind vorteilhafte Weiterbildungen und Verbesserungen des im Hauptanspruch angegebenen Druckschaltventils möglich.

Besonders vorteilhaft ist die Ausgestaltung des Druckschaltventils gemäß Anspruch 2, weil hierdurch eine kostengünstig erstellbare Baueinheit aus einfach zu montierenden Bauteilen geschaffen wird, welche leicht prüfbar ist.

Die im Anspruch 3 angegebene Maßnahme gibt Varianten für die kostengünstige Herstellung des Abströmkanals an, wobei durch Wahl der Anzahl der Durchbrüche, deren Form und Lage eine Schwächung des Hohlteils vermieden werden kann.

Mit den in den Ansprüchen 4 bis 6 gekennzeichneten Weiterbildungen werden der Montage des Druckschaltventils und der Anschlußtechnik dienende Vereinfachungen angegeben.

## Zeichnung

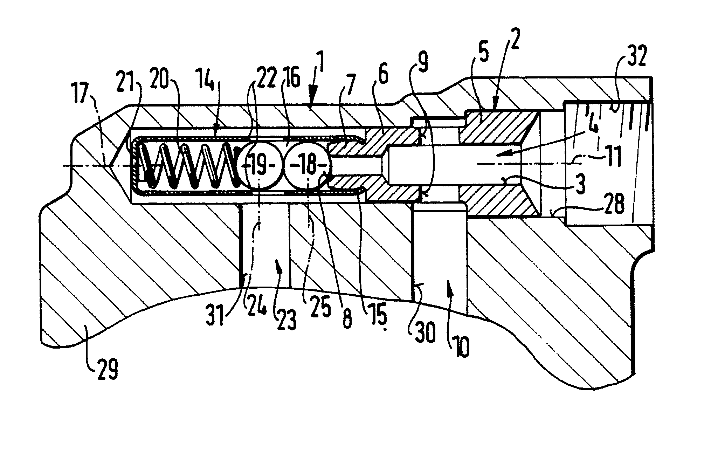

Ein Ausführungsbeispiel der Erfindung ist in der Zeichnung anhand eines Längsschnittes durch ein Druckschaltventil vereinfacht dargestellt und in der nachfolgenden Beschreibung näher erläutert.

## Beschreibung des Ausführungsbeispiels

Das in der Zeichnung dargestellte Druckschaltventil 1 weist ein Drehteil 2 mit einer längslaufenden, abgestuften Durchgangsbohrung 3 auf. Diese dient als Verteilkanal 4 für ein hydraulisches Druckmittel. Das Drehteil 2 hat einen ersten Zylinderabschnitt 5, an den sich ein im Durchmesser kleinerer, zweiter Zylinderabschnitt 6 und ein auf diesen folgender zylindrischer Ansatz 7 anschließt. Am Ansatz 7 geht die Bohrung 3 in einen Ventilsitz 8 über. Im Bereich des zweiten Zylinderabschnitts 6 ist die Bohrung 3 des Drehteils 2 von einer Querbohrung 9 gekreuzt. Diese dient als ein Zuströmkanal 10 für Druckmittel.

An das Drehteil 2 schließt ein büchsenförmiges Hohlteil 14 an, dessen offener Endabschnitt 15 dicht auf den zylindrischen Abschnitt 7 des Drehteils 2 gesteckt und mit diesem formschlüssig verbunden ist. Das Hohlteil 14 besitzt eine zylindrische Kammer 16 mit gleichachsig zur Längsachse 11 des Drehteils 2 verlaufender Längsachse 17. In der Kammer 16 ist ventilsitzseitig eine erste Kugel 18 aufgenommen. Diese dient als mit dem Ventilsitz 8 des Drehteils 2 zusammenwirkender Schließkörper. An der ersten Kugel 18 greift eine zweite, in der Kammer 16 des Hohlteils 17 aufgenommene Kugel 19 an, welche unter der Wirkung einer gleichfalls in der Kammer 16 befindlichen, zylindrischen Schraubendruckfeder 20 steht. Diese ist am vom Ventilsitz 8 des Drehteils 2 abgewandten Boden 21 des Hohlteils 14 abgestützt.

Die beiden Kugeln 18 und 19 haben gleichen Durchmesser und sind mit geringem radialen Spiel in der zylindrischen Kammer 16 des Hohlteils 14 längsgeführt. Außerdem weist das Hohlteil 14 zwei einander gegenüberliegende Durchbrüche 22 auf, welche Teil eines Abströmkanals 23 für Druckmittel sind. Die Durchbrüche 22 haben Kreisquerschnitt; sie können jedoch auch als Langlöcher ausgebildet sein. Ihre Anzahl kann weniger als zwei oder mehr als zwei betragen. Der von den Durchbrüchen 22 gebildete Mündungsquerschnitt des Abströmkanals 23 beginnt bei der in der Zeichnung wiedergegebenen Ruhestellung der beiden Kugeln 18 und 19, vom Ventilsitz 8 aus gesehen, zwischen den beiden Kugeln und endet hinter der den Kugelmittelpunkt der zweiten Kugel 19 enthaltenden, rechtwinklig zur Kammerlängsachse 17 verlaufenden Normalebene 24 der zweiten Kugel 19. Dabei hat die entsprechende Normalebene 25 der ersten Kugel, wieder vom Ventilsitz 8 aus gesehen, einen größeren Abstand zum Anfang des Mündungsquerschnittes des Abströmkanals 23 als die Normalebene 24 vom Ende des Mündungsquerschnitts.

Das als Baueinheit aus dem Drehteil 2, dem Hohlteil 14 mit den darin eingefügten Kugeln 18 und 19 sowie der Feder 20 bestehende Druckschaltventil 1 ist in einer abgestuften Sacklochbohrung 28 eines Pumpengehäuses 29 aufgenommen. Dabei sitzen der erste Zylinderabschnitt 5 sowie der zweite Zylinderabschnitt 6 des Drehteils 2 mit Preßsitz dicht in der Bohrung 28 des Gehäuses 29. An die Querbohrung 9 des Drehteils 2 schließt sich eine Bohrung 30 des Gehäuses 29 an, mit welcher der Zuströmkanal 10 mit der Druckseite einer als Vorladepumpe bezeichneten Niederdruckpumpe einer nicht dargestellten Fahrzeugbremsanlage verbunden ist. Das Hohlteil 14 des Druckschaltventils 1 ist in der Bohrung 28 des Gehäuses 29 mit umfangsseitigem Spalt aufgenommen. Im Bereich der Durchbrüche 22 des Hohlteils 14 weist das Gehäuse 29 eine den Abströmkanal 23 fortsetzende Bohrung 31 auf. Der Abströmkanal 23 führt zu der Saugseite der nicht dargestellten Niederdruckpumpe. Außerdem besitzt das Gehäuse 29 einen gleichachsig zur Bohrung 28 verlaufenden Anschlußstutzen 32, durch den das Druckschaltventil 1 in das Gehäuse 29 eingeführt ist. Der den Verteilkanal 4 des Druckschaltventils 1 fortsetzende Anschlußstutzen 32 dient der Verbindung mit nicht dargestellten Radbremszylindern bzw. mit der Saugseite einer gleichfalls nicht gezeichneten Hochdruckpumpe der Fahrzeugbremsanlage.

Das Druckschaltventil 1 hat folgende Funktion:

Von der Niederdruckpumpe aus einem Vorratsbehälter einer hydraulischen Fahrzeugbremsanlage angesaugtes Druckmittel wird in den Zuströmkanal 10 gefördert und fließt durch den Verteilkanal 4 und Anschlußstutzen 32 zum Radbremszylinder des Antriebsschlupf unterliegenden Fahrzeugrades. Der Radbremszylinder setzt dem Druckmittel Widerstand entgegen, so daß der Druck im Radbremszylinder, im Verteilkanal 4 und im Zuströmkanal 10 ansteigt und ein Abheben der ersten Kugel 18 entgegen der Kraft der Druckfeder 20 vom Ventilsitz 8 bewirkt. Bei weiterhin erhöhtem Druck im Verteilkanal 4 wandern die beiden Kugeln 18 und 19 gegen den Widerstand der Druckfeder 20 in Richtung auf den Boden 21 des Hohlteils 14. Dabei erreicht die federseitige, zweite Kugel 19 mit ihrer Normalebene 24 das Ende des Mündungsquerschnitts des Abströmkanals 23, bevor die Normalebene 25 der ventilsitzseitigen, ersten Kugel 18 den Anfang des Mündungsquerschnitts erreicht hat. Die weiterhin vom hohen Druck im Verteilkanal 4 belastete erste Kugel 18 bewegt nun die zweite Kugel 19 unter Verdrängung von in der Kammer 16 befindlichem Druckmittel tiefer in den federseitigen Kammerteil hinein. Damit tritt eine Dämpfung der Öffnungsbewegung der ersten Kugel 18 unter Aufrechterhaltung des erhöhten Druckes im Zuströmkanal 10, im Verteilkanal 4 und im Radbremszylinder ein. Wenn die Normalebene 25 der ventilsitzseitigen, ersten Kugel 18 jedoch den der zylindrischen Kammer 16 zugeordneten Mündungsquerschnitt des zweiten Abströmkanals 23 erreicht, werden im weiteren Verlauf der Bewegung der ventilsitzseitigen, ersten Kugel 18 die Durchbrüche 22 des Hohlteils 14 freigegeben. Während nach dem Abheben der ventilsitzseitigen, ersten Kugel 18 vom Ventilsitz 8 Druckmittel nur mit geringem Volumenstrom den sehr schmalen Spalt zwischen der Kugel 18 und dem Kammerinnenumfang überwinden konnte, fließt jetzt ein relativ großer Volumenstrom durch den zweiten Abströmkanal 23 zur Saugseite der Niederdruckpumpe der Fahrzeugbremsanlage. Mit der Freigabe der Durchbrüche 22 durch die ventilsitzseitige, erste Kugel 18 bricht der von der Niederdruckpumpe erzeugte höhere Druck im Zuströmkanal 10, im Verteilkanal 4 und im Radbremszylinder zusammen. Damit wird nun die Niederdruckpumpe mit ihrem niedrigeren Auslegungsdruck beansprucht, welcher zur Versorgung der Hochdruckpumpe mit Druckmittel ausreicht. Die Hochdruckpumpe übernimmt jetzt die Steigerung des Bremsdruckes im Radbremszylinder. Der während des vorstehend beschriebenen Schaltens des Druckschaltventils 1 von der Niederdruckpumpe erzeugte höhere Druck war jedoch ausreichend, um die Bremsbeläge an der Bremsscheibe oder an der Bremstrommel der Radbremse des Antriebsschlupf unterworfenen Fahrzeugrades zur Anlage zu bringen.

## Patentansprüche

1. Druckschaltventil, insbesondere für hydraulische Fahrzeugbremsanlagen mit Antriebsschlupfregelung (ASR), mit einer einem Zuströmkanal und einem Abströmkanal für Druckmittel zugeordneten zylindrischen Kammer, in der ein längsbewegbarer, von einer Druckfeder belasteter Schließkörper mit einem Ventilsitz zusammenwirkt, gekennzeichnet durch die Merkmale:
In der zylindrischen Kammer (16) sind zwei Kugeln (18, 19) mit geringem radialen Spiel aufgenommen, von denen eine erste Kugel (18) der am Ventilsitz (8) angreifende Schließkörper ist,
die zweite Kugel (19) ist unter der Wirkung der Druckfeder (20) an der ersten Kugel (18) abgestützt, und zwar an deren vom Ventilsitz (8) abgewandter Seite,
der Abströmkanal (23) zweigt von der zylindrischen Kammer (16) an einer Stelle so ab, daß beim Schalten des Ventils (1) die den Kugelmittelpunkt der ventilsitzseitigen, ersten Kugel (18) enthaltende, rechtwinklig zur Kammerlängsachse (17) verlaufende Normalebene (25) den Mündungsquerschnitt des Abströmkanals (23) erst dann erreicht, wenn die entsprechende Normalebene (24) der federseitigen, zweiten Kugel (19) bereits aus dem Mündungsquerschnitt ausgetreten ist.

2. Druckschaltventil nach Anspruch 1, dadurch gekennzeichnet, daß die zylindrische Kammer (16) von einem büchsenförmigen Hohlteil (14) gebildet ist, welches mit seinem offenen Endabschnitt (15) dicht auf einen den Ventilsitz (8) aufweisenden zylindrischen Ansatz (7) eines Drehteils (2) gesteckt und befestigt ist, das eine den Ventilsitz (8) und den Zuströmkanal (10) verbindende, als Verteilkanal (4) für Druckmittel dienende Durchgangsbohrung (3) hat.

3. Druckschaltventil nach Anspruch 2, dadurch gekennzeichnet, daß der Abströmkanal (23) als wenigstens ein Durchbruch (22) zylindrischen Querschnitts oder als wenigstens ein Langloch im Hohlteil (14) ausgebildet ist.

4. Druckschaltventil nach Anspruch 2, dadurch gekennzeichnet, daß das Drehteil (2) eine vom Verteilkanal (4) abzweigende Querbohrung (9) für Druckmittel hat, welche als Zuströmkanal (10) für Druckmittel vorgesehen ist.

5. Druckschaltventil nach Anspruch 4, dadurch gekennzeichnet, daß das Ventil (1) als Baueinheit in eine Bohrung (28) eines Gehäuses (29) einpreßbar ist, in dem der Verteilkanal (4), der Abströmkanal (23) und der Zuströmkanal (10) fortgesetzt sind.

6. Druckschaltventil nach Anspruch 5, dadurch gekennzeichnet, daß die Bohrung (28) des Gehäuses (29) als dem Verteilkanal (4) des Ventils (1) zugeordneter Anschlußstutzen (32) für die Druckmittelableitung dient.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 703 511   (KNORR-BREMSE) <br> * Seite 3, Absatz 4 - Seite 4, Absatz 2; Figur 1 * <br> - - - | 1 | B 60 T 8/48 <br> B 60 T 11/34 |
| A | DE-C-1 049 184   (FRIESEKE & HOEPFNER) <br> * Spalte 1, Zeile 37 - Spalte 3, Zeile 2; Figuren 1-2b * <br> - - - - - | 1 | |

|  | RECHERCHIERTE SACHGEBIETE (Int. Cl.5) |
|---|---|
|  | B 60 T <br> F 16 K |

Der vorliegende Recherchenbericht wurde für alle Patentansprüche erstellt

| Recherchenort | Abschlußdatum der Recherche | Prüfer |
|---|---|---|
| Berlin | 17 September 91 | BLURTON M D |